# EUROPEAN PATENT APPLICATION

(11) **EP 4 589 964 A1**
(43) Date of publication of application: **23.07.2025**
(21) Application number: 23890816.4
(22) Date of filing: 15.11.2023
(51) Int. Cl.: H04N 21/431

(54) **VIDEO EDITING METHOD AND APPARATUS, DEVICE, AND MEDIUM**

(30) Priority: 16.11.2022 CN 202211435280
(71) Applicant: Beijing Zitiao Network Technology Co., Ltd., Beijing 100190 (CN)
(72) Inventor: DENG, Chunguo, Beijing 100028 (CN); ZHANG, Xinghua, Beijing 100028 (CN)
(74) Representative: Williams, Michael David
(86) International application number: PCT/CN2023/131815
(87) International publication number: WO 2024/104385

(57) **Abstract**

Embodiments of the present disclosure relate to a video editing method and apparatus, a device, and a medium. The method includes: presenting objects to be edited and editing tools on a video editing interface; in response to triggering a first editing tool in the editing tools for a first object to be edited in the objects to be edited , executing a preset script corresponding to the first editing tool to edit the first object to be edited , so as to obtain a second object to be edited ; in response to triggering a second editing tool in the editing tools for a third object to be edited in the objects to be edited , presenting a script editing interface of the third object to be edited , obtaining a target script input in the script editing interface, and executing the target script to edit the third object to be edited , so as to obtain a fourth object to be edited ; and generating a target video on the basis of the second object to be edited and/or the fourth object to be edited .

## Description

### CROSS-REFERENCE TO RELATED APPLICATIONS

The present application is based on and claims priority to Chinese Patent Application No. 202211435280.X filed on Nov. 16, 2022, the disclosure of which is incorporated by reference herein in its entirety.

### TECHNICAL FIELD

The present disclosure relates to the technical field of video processing, and in particular to a video editing method and apparatus, a device, and a medium.

### BACKGROUND

The existing video editing software provides users with a variety of functions of video editing.

### SUMMARY

The present disclosure provides a video editing method and apparatus, a device, and a medium.

Some embodiments of the present disclosure provide a video editing method, including: presenting objects to be edited and editing tools on a video editing interface, where the editing tools are configured to trigger editing operations on the objects to be edited; in response to triggering a first editing tool in the editing tools for a first object to be edited in the objects to be edited, performing edit processing on the first object to be edited by executing a preset script corresponding to the first editing tool, so as to obtain a second object to be edited; in response to triggering a second editing tool in the editing tools for a third object to be edited in the objects to be edited, presenting a script editing interface of the third object to be edited, acquiring a target script input in the script editing interface, and performing edit processing on the third object to be edited by executing the target script, so as to obtain a fourth object to be edited; generating a target video based on the second object to be edited and/or the fourth object to be edited.

In some embodiments, a video editing track is presented on the video editing interface, and the objects to be edited include elements on the video editing tack and/or attributes of the target video.

In some embodiments, a script editing window through which script codes can be entered is presented on the script editing interface; the step of acquiring a target script input in the script editing interface comprises: acquiring script codes entered by a user through the script editing window; obtaining a target script based on the script codes entered by the user.

In some embodiments, a script acquisition link is presented on the script editing interface; the step of acquiring a target script input in the script editing interface includes: in response to the script acquisition link being triggered, jumping to a script library; wherein the script library includes a personal script library and/or a public script library; acquiring a script selected by a user from the script library; obtaining a target script based on the script selected by the user.

In some embodiments, the step of obtaining a target script based on the script selected by the user includes: in a case where the user performs editing for the selected script, taking the edited script as the target script.

In some embodiments, the third object to be edited includes a plurality of third objects to be edited , and the step of performing edit processing on the third object to be edited by executing the target script includes: based on start times indicated in the target scripts corresponding to the plurality of third objects to be edited, ordering the target scripts corresponding to the plurality of third objects to be edited in an ascending order of time; for a third object to be edited ordered in a first place, when a current time reaches the start time corresponding to the third object to be edited , performing edit processing on the third object to be edited by executing the target script corresponding to the third object to be edited; for a third object to be edited not ordered in the first place, when a target script corresponding to a previous third object to be edited of the third object to be edited has been executed and the current time reaches the start time corresponding to the third object to be edited, performing edit processing on the third object to be edited by executing the target script corresponding to the third object to be edited .

In some embodiments, the method further includes: in a case where the target script corresponding to the third object to be edited indicates that the start time corresponding to the third object to be edited is modified, re-ordering the target scripts corresponding to the plurality of third objects to be edited in an ascending order of time.

In some embodiments, the method further includes: building a tree diagram based on hierarchical relationships among the plurality of third objects to be edited ; determining a script initialization order of the plurality of third objects to be edited according to the tree diagram and a preset traversal algorithm; executing an initialization operation on the target scripts of the plurality of the third objects to be edited based on the script initialization order.

In some embodiments, a preview player is also presented on the video editing interface; the method further includes: presenting an editing effect corresponding to the target script on the preview player.

In some embodiments, the method further includes: in a case where it is monitored that the user performs edit processing on a fourth object to be edited through the first editing tool, modifying a target script for generating the fourth object to be edited based on the edit processing manner corresponding to the first editing tool.

In some embodiments, the method further includes: providing instructions for use of the editing tool at a designated position of the video editing interface; wherein the instructions for use include a script language instruction and a script function instruction corresponding to the object to be edited .

Some embodiments of the present disclosure also provide a video editing apparatus, comprising: a presentation module for presenting objects to be edited and editing tools on a video editing interface, wherein the editing tools are configured to trigger editing operations on the objects to be edited ; a first editing module for performing, in response to triggering a first editing tool in the editing tools for a first object to be edited in the objects to be edited, performing edit processing on the first object to be edited by executing a preset script corresponding to the first editing tool, so as to obtain a second object to be edited ; a second editing module for, in response to triggering a second editing tool in the editing tools for a third object to be edited in the objects to be edited , presenting a script editing interface of the third object to be edited, acquiring a target script input in the script editing interface, and performing edit processing on the third object to be edited by executing the target script, so as to obtain a fourth object to be edited; a video generation module for generating a target video based on the second object to be edited and/or the fourth object to be edited .

Some embodiments of the present disclosure also provide an electronic device, which includes: a processor; a memory for storing instructions executable by the processor; wherein the processor is configured to read the executable instructions from the memory and execute the executable instructions to implement the video editing method as provided in the embodiments of the present disclosure.

Some embodiments of the present disclosure also provide a computer readable storage medium storing a computer program for executing the video editing method as provided in the embodiments of the present disclosure.

Some embodiments of the present disclosure also provide a computer program product including a computer program, where the computer program, when executed by a processor, implements any said video editing method.

It should be understood that what is described in this part is not intended to identify key or important features of the embodiments of the present disclosure, nor is it intended to limit the scope of the present disclosure. Other features of the present disclosure will be readily understood from the following specification.

### BRIEF DESCRIPTION OF THE DRAWINGS

The accompanying drawings herein, which are incorporated in and constitute a part of the present specification, illustrate embodiments consistent with the present disclosure and together with the specification, serve to explain the principles of the present disclosure.

In order to explain the technical solutions in the embodiments of the present disclosure or in the prior art more clearly, the drawings needed in the description of the embodiments or the prior art will be briefly introduced below. Apparently, for those skilled in the art, other drawings can be obtained according to these drawings without inventive effort.
Fig. 1 is a schematic flow diagram of a video editing method provided by an embodiment of the present disclosure;
Fig. 2 is a schematic diagram of a video editing interface provided by an embodiment of the present disclosure;
Fig. 3 is a schematic diagram of a video editing interface provided by an embodiment of the present disclosure;
Fig. 4 is a schematic diagram of a video editing interface provided by an embodiment of the present disclosure;
Fig. 5 is a schematic tree diagram of an element hierarchical relationship provided by an embodiment of the present disclosure;
Fig. 6 is a schematic diagram of script initialization ordering provided by an embodiment of the present disclosure;
Fig. 7 is a schematic diagram of start and end times of objects to be edited provided by an embodiment of the present disclosure;
Fig. 8 is a schematic diagram of a script execution flow provided by an embodiment of the present disclosure;
Fig. 9 is a schematic structural diagram of a video editing apparatus provided by an embodiment of the present disclosure;
Fig. 10 is a schematic structural diagram of an electronic device provided by an embodiment of the present disclosure.

### DETAILED DESCRIPTION

In order to understand the above objects, features and advantages of the present disclosure more clearly, the solutions of the present disclosure will be further described below. It should be noted that the embodiments of the present disclosure and the features in the embodiments can be combined with each other without conflict.

In the following description, many specific details are set forth in order to fully understand the present disclosure, but the present disclosure can also be implemented in other ways than those described herein. Obviously, the embodiments in the specification are only part of the embodiments of the present disclosure, not all of them.

The existing video editing software provides users with a variety of functions of video editing, but these editing functions are all solidified, that is, users can only use one or more of the solidified functions provided by software to accomplish video editing operations. The flexibility is poor and it is difficult to meet the diverse requirements of video editing of users.

Specifically speaking, the editing functions provided to users by the existing video editing software are all solidified functions, and users can only use one or more of the solidified functions provided by software to accomplish video editing operations. The way users use the solidified functions to perform video editing is mainly a visual video editing way. For example, the video editing software will directly provide users with function control buttons for video editing on the interface, and users can use the function control buttons to control the effects of the objects to be edited acting on the video. For another example, users can also directly adjust the appearance times/positions of materials in a dragging way.

Through research, the inventor found that the above-mentioned video editing way can only enable users to use one or more of the solidified functions provided by software to accomplish the video editing operations. The flexibility is poor and it is also impossible to meet the diverse requirements of users. For example, the existing software only provides several entrance ways of materials in the video, and users can only select from the several existing entrance ways. There are certain limitations and it is impossible to meet user's own personalized requirements. In addition, the above-mentioned video editing way will also bring inconvenience to users to a certain extent. For example, users need to drag the material track to adjust the appearance time of materials in the video, but in many cases, it is impossible to directly and accurately adjust the appearance of the materials to the time point expected by users. It may need to be adjusted repeatedly, so there is also a certain degree of inconvenience. In addition, for some users who need to process videos in batches, it is more complicated to use the existing video editing ways. Assuming that the ways to edit a plurality of videos are mostly the same, for example the same material needs to be used, the appearance time/entrance way of the material in the video is the same, so users need to adjust the appearance time of the material via dragging respectively for each video, and find the required entrance way, which is cumbersome and inefficient in processing videos in batches.

The above-mentioned defects present in the video editing solutions in the related art are the result obtained by the applicant through practice and careful study. Therefore, the discovery process of the above-mentioned defects and the solutions proposed for the above-mentioned defects in the embodiments of the present disclosure below should be regarded as the contribution made by the applicant to the present application.

In order to improve one or more of the above problems, an embodiment of the present disclosure provides a video editing method and apparatus, a device, and medium, which are explained in detail below.

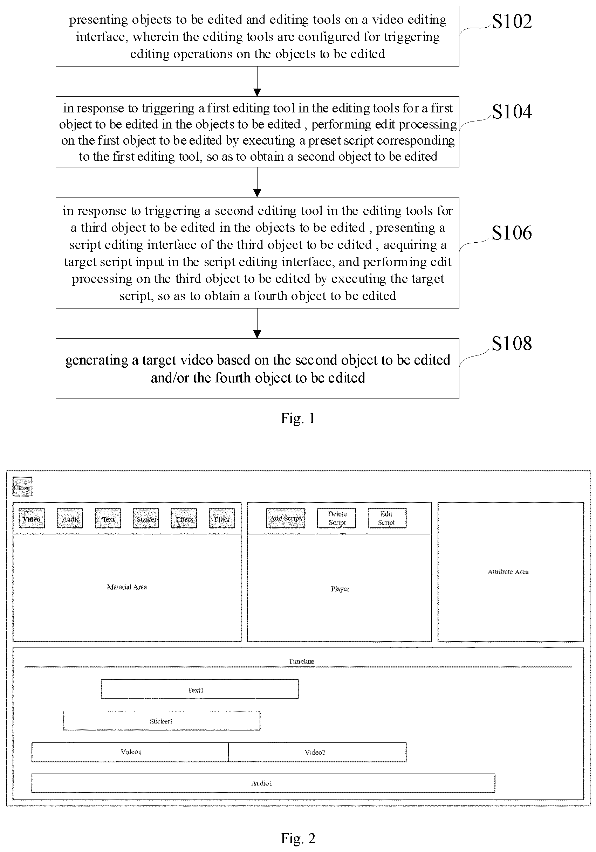

Fig. 1 is a schematic flow diagram of a video editing method provided by an embodiment of the present disclosure. The method can be executed by a video editing apparatus, where the apparatus can be implemented by software and/or hardware, and generally can be integrated into an electronic device, such as a mobile phone, a computer, a portable wearable device, etc., which is not limited herein. Alternatively, the above-mentioned video editing method can be applied to a client (such as video clipping software) provided with a video clipping function. As shown in Fig. 1, the method mainly includes the following steps S102 to S108.

Step S102, presenting objects to be edited and editing tools on a video editing interface, where the editing tools are configured for triggering editing operations on the objects to be edited .

In some specific implementation examples, a video editing track is presented on the video editing interface, and the objects to be edited include elements on the video editing track and/or attributes of the target video. The elements on the editing track include but are not limited to track segments, and the attributes of the target video can be, for example, the length of the target video corresponding to the total length of the timeline, the resolution of the target video, etc. The objects to be edited are not limited in the embodiments of the present application, and any object involved in the video editing process can be taken as the object to be edited . That is, the object to be edited is an object required for clipping the to-be-processed video, for example, the materials, the tracks corresponding to the materials, the timeline, and etc. can also be considered as the objects to be edited . It can be understood that, various elements that can clip the video (that is, change the video effect) can be presented on the video editing interface. The elements on the editing track in the objects to be edited include track segments, which can correspond to materials, such as text track segments, sticker track segments, effects track segments, etc., where the materials include but are not limited to stickers, texts, effects, filters, transition animations, videos, pictures, etc. Specifically speaking, stickers are static pictures or dynamic pictures that can be attached to a video; the texts are texts that can be attached to a video; the effects can be understood as specialized effects that can act on a video image, and a renderer can be responsible for the secondary processing and rendering of the video image; the filters are color effects that can act on a video image; the transition animations can be understood as switching animations between two segments in a video, whereby to improve the coherence and transition effects of segments switching. Generally speaking, the above-mentioned materials would be provided in video editing software for users to perform video editing with the materials according to requirements. Each material corresponds to a track (which can be called an material track), and the track is used to represent the distribution of the material on the timeline, which can also be understood as the above-mentioned track segments. By combining a plurality of track segments and setting different track segments and different time periods, different visual effects can be presented. The timeline can reflect the total duration of the video and can show the time progress of the video, so as to control the image content displayed at a certain point in time.

In addition to this, a preview player can be also set on the video editing interface, and a portion of objects to be edited (such as stickers, texts, etc.) can also be presented in the preview player. In addition, the video editing interface can also include an object to be edited selection area for users to select therefrom which objects to be edited as required are to be added to the track. In addition, an area for presenting editing tools can also be set on the video editing interface, whereby users can select the specific type of the required editing tools. In some specific implementation examples, the editing tools include a first editing tool and a second editing tool. The first editing tool is a preset operating tool that can be automatically triggered by users, and is mainly used for users to perform editing in a preset way of video editing software. The second editing tool is a customized operating tool that requires users to input scripts, and is mainly used for users to perform customized editing according to their own requirements. In actual applications, controls corresponding to the editing tools can be displayed in an area for presenting the editing tools on the video editing interface. Different editing tools correspond to different editing functions for users to select therefrom according to requirements and to call the required editing tool by means of triggering the control.

Step S104, in response to triggering a first editing tool in the editing tools for a first object to be edited in the objects to be edited, performing edit processing on the first object to be edited by executing a preset script corresponding to the first editing tool, so as to obtain a second object to be edited .

As mentioned above, the first editing tool is a preset operating tool that can be automatically triggered by users. In specific implementation, a preset script corresponding to the first editing tool is pre-stored in the software system. When triggering the first editing tool, users can directly execute the preset script corresponding to the first editing tool, where the edit processing on the first object to be edited can be implemented, and the first object to be edited after edit processing can be called a second object to be edited . It can be understood that the script is essentially a code segment, which can realize certain functional logic. The preset script corresponding to the first editing tool can be used for indicating the specific way to perform edit processing on the first object to be edited , such as setting the style and content of the text material and the appearance time period of the text material in the video.

Step S106, in response to triggering a second editing tool in the editing tools for a third object to be edited in the objects to be edited , presenting a script editing interface of the third object to be edited , acquiring a target script input in the script editing interface, and performing edit processing on the third object to be edited by executing the target script, so as to obtain a fourth object to be edited .

As mentioned above, the second editing tool is a customized operating tool that requires users to input scripts. In actual applications, a script addition port corresponding to the second editing tool can be presented on the video editing interface. When users trigger the script addition port, it can be considered that users have triggered the second editing tool. The script addition port provides users with a path to add scripts, and users can add the target script corresponding to the third object to be edited through the script addition port. The target script can also be understood as a customized script, which can be used for indicating the specific way to perform edit processing on the third object to be edited , and the way is set by users according to their own requirements. The above-mentioned way provided by the embodiments of the present disclosure is equivalent to providing users with a path to implant code segments according to requirements by means of exposing the interface, so that users can perform video clipping according to their own requirements instead of being limited to the solidified functions of video editing software, thus meeting the diverse requirements for clipping of users.

The script input in the script editing interface is a target script (customized script). Users can directly write script codes by themselves in the script editing interface according to requirements, or they can select the required script from the script library and enter it into the script editing interface. The embodiment of the present disclosure does not limit the sources of scripts. By executing the target script obtained from the script editing interface, the editing processing on the third object to be edited can be realized, and the third object to be edited after edit processing can be called a fourth object to be edited . It should be noted that the third object to be edited can be the same as or different from the first object to be edited or the second object to be edited . It should be noted that relational terms such as "first" and "second" herein are only used to distinguish entities without necessarily requiring or implying any actual relationship or order between these entities.

Step S108, generating a target video based on the second object to be edited and/or the fourth object to be edited .

In actual applications, in a case where there is only the second object to be edited , alternatively, in a case where users use only the first editing tool, video edit processing is performed based on the second object to be edited to obtain a target video; in a case where there is only the fourth object to be edited , alternatively, in a case where users use only the second editing tool, video edit processing is performed based on the fourth object to be edited to obtain a target video; in a case where there are both the second object to be edited and the fourth object to be edited , alternatively, in a case where users use both the first editing tool and the second editing tool, a target video is obtained based on the second object to be edited and the fourth object to be edited . In actual applications, the original video can be edited into the target video according to the second object to be edited and/or the fourth object to be edited .

According to the above-mentioned technical solution provided by the embodiments of the present disclosure, it is possible to make users directly use a preset script corresponding to the first editing tool to perform edit processing, which is convenient and fast, and it is also possible to present the script editing interface when users trigger the second editing tool, so that users can input the required target script by themselves in the script editing interface according to requirements and perform edit processing with the target script, that is, users are granted with a script addition permission, thus meeting the diverse requirements for editing of users and greatly improving the flexibility of video editing.

In some implementation examples, a script editing interface is presented on the video editing interface, and two implementations for acquiring the target script input in the script editing interface are respectively described below.

Implementation 1: a script editing window through which script codes can be entered is presented on the script editing interface; upon this, the step of acquiring a target script input in the script editing interface includes: acquiring script codes entered by a user through the script editing window; obtaining a target script based on the script codes entered by the user. In actual applications, the script editing window can be presented in the form of a floating window or an embedded interface, so that users can write the target script through the script editing window.

By means of presenting the script editing window directly, it is convenient for users to directly write the required script in the script editing window according to requirements, so as to realize their own diverse requirements for video editing, which is very flexible.

Implementation 2: a script acquisition link is presented on the script editing interface; upon this, the step of acquiring a target script input in the script editing interface includes: in response to the script acquisition link being triggered, jumping to a script library; where the script library includes a personal script library and/or a public script library; then acquiring a script selected by a user from the script library; obtaining a target script based on the script selected by the user.

The personal script library is used for storing private scripts pre-written by individual users. For example, users store a plurality of scripts with common functions in the personal script library, which is convenient for a direct call when used later. The public script library is used for storing public scripts pre-written by the public. For example, users can upload the scripts written by themselves to the public script library for public use. This public script library can also be called a script mall, and users can download the required script through the public script library. On this basis, a script acquisition link that can jump to the script library is presented on the script editing interface. After users click the script acquisition link, the interface automatically jumps to the personal script library or the public script library selected by users, so that users can select the required script from the script library. In actual applications, users can directly take the selected script as the target script, or further edit the selected script. In a case where users perform editing on the selected script, the edited script is taken as the target script.

By the above means of presenting a script acquisition link, users can conveniently and quickly select from the script library the required script, which can be the script previously written by users or the script shared by the public. On the basis of breaking the inherent functions of video editing software, the convenience of video editing can be also be further improved by reducing the time consumption of video editing.

In actual applications, the above-mentioned Implementation 1 and/or Implementation 2 can be flexibly selected according to requirements, for example, the script editing window and the script acquisition link can be presented at the same time, which is convenient for users to select the required way to add scripts.

To sum up, after users select the third object to be edited , a corresponding script editing interface can be provided for users. The added script can be written by users on site in the script editing window, or can be a written historical script which is called by users through the personal script library, or can be a script downloaded by users from the public script library or other platforms. Therefore, there are various ways to add scripts, which provide great convenience for users to add a corresponding script for the third object to be edited .

In actual applications, considering that users have already entered the target script corresponding to the third object to be edited in the script editing interface in the historical editing process, when users trigger the second editing tool for the third object to be edited again, the historical script of the third object to be edited can be directly presented in the script editing interface. This script can be the script which was last edited and saved by users for the third object to be edited or the script that was last added through the script library, and users can directly make a modification according to the requirements on the basis of the historical script. In specific implementation, a script editing button can be set on the script editing interface. When users trigger the script editing button, the current script presented on the interface can be modified and adjusted. This way provides users with a flexible and convenient way to modify scripts, which is convenient for users to modify scripts for many times according to requirements so as to adjust the functions that can be realized by the scripts. In addition, a script deletion button can be set on the script editing interface, and when users trigger the script deletion button, a deletion operation can be performed on the current script presented on the interface. On the basis of deleting the script, users can further add a new script or add no new script. In the latter case, it means that users may not need to use the third object to be edited of which the script has been deleted, or users do not need to perform edit processing on the third object to be edited by means of the customized script any longer, but instead perform edit processing on the third object to be edited by means of the preset script corresponding to the first editing tool.

In order to facilitate the understanding of the above-mentioned content, please refer to the schematic diagram of a video editing interface shown in Fig. 2. In the video editing interface, the track segments of texts, stickers, and other elements on the video editing track are presented, and trigger buttons corresponding to videos, audios, texts, stickers, and other objects to be edited are also displayed, and a script addition button (the "Add Script" button as shown) for initiating a script addition request, a script deletion button (the "Delete Script" button as shown) for initiating a script deletion request, and a script editing button (the "Edit Script" button as shown) for initiating a script editing request are also showed. The above-mentioned buttons can be used to enable users to trigger the editing tools. Users can select the required objects to be edited . In Fig. 2, a video trigger button is selected as an example to illustrate, where the script addition button is in a selectable state (that is, it can be triggered). Fig. 2 is only a schematic diagram, not a real screen, in which the shaded buttons indicate that the buttons are in a selectable state (that is, users can click), and the bold texts indicate that the buttons have been in a triggered state (that is, selected). Users can call the edit tools in the embodiments of the present disclosure by triggering the above buttons.

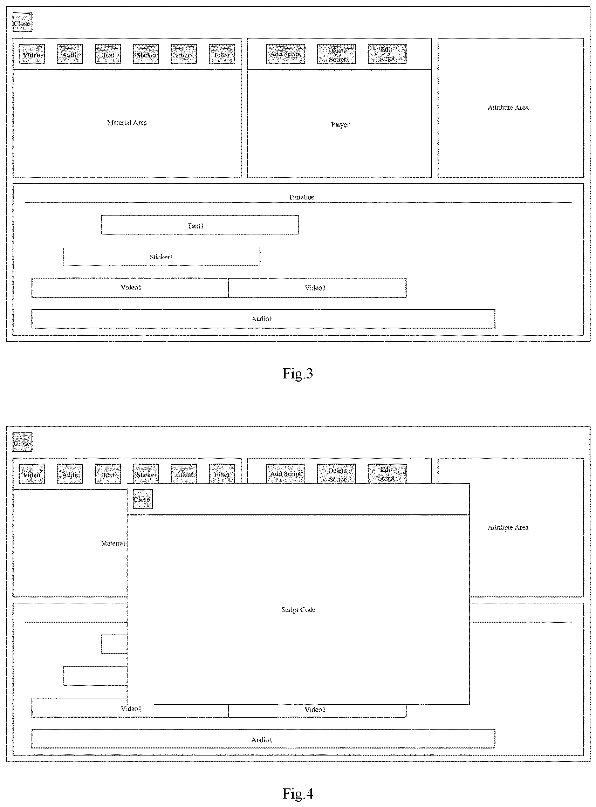

On the basis of Fig. 2, please refer to the schematic diagram of a video editing interface shown in Fig. 3. It indicates that after users have added a script for the selected object to be edited , both the script deletion button and the script editing button are in a selectable state, that is, users can further perform an editing or deleting operation for the added script. When users trigger the script edit button, a script editing interface in the form of a floating window as shown in Fig. 4 can also appear on the video editing interface. The script editing interface includes a script program editing box, and users can enter the required script codes in the script editing interface according to requirements. It should be noted that Fig. 4 is only an example. In actual applications, the script editing interface can also appear on the video editing interface in an embedded form.

All the above-mentioned Figs. 2 to 4 are exemplary explanations, which show the trigger buttons corresponding to the elements and the script addition/editing/deletion buttons, and also show, e.g. attribute areas (which can represent attributes of the element, such as the added text font size and text font style), element tracks, timelines, and etc. In actual applications, on the video editing interface, the effects of presenting the objects to be edited on the video (video editing effects), traditional buttons such as function control buttons for visualized operations, and ports for setting parameters are be presented at the same time. That is, on the basis of retaining the original visualized video clipping way, the way to perform video clipping with the customized script of users can be added, so that users can flexibly select the required way for video clipping. For example, if users want to select five objects to be edited for video clipping, video clipping can be performed on three of the five objects to be edited by means of customized scripts, so as to realize functions that are not provided in video editing software. For the other two objects to be edited, the functions provided by video editing software can meet the requirements of users, so the visualized clipping way can be adopted directly. That is, in actual applications, each object to be edited in the video editing software can correspond to a script. For each object to be edited , users can control the object to be edited by using a customized script, or by using a preset script corresponding to the existing function button, which is not limited here.

To sum up, in the above way, users can flexibly select the editing tool required for video clipping according to requirements, and add, edit and delete the corresponding scripts for the objects to be edited of the to-be-clipped video, so as to meet their own diverse requirements for video clipping.

In order to make users clearly know the specific operating way to realize video clipping based on scripts, the above-mentioned method provided by the embodiments of the present disclosure further includes: providing instructions for use of the editing tool at a designated position in the video editing interface; where the instructions for use include a script language instruction and a script function instruction corresponding to the objects to be edited . The designated position can be, for example, a software introduction page, a function page, etc., which is not limited here. That is, in actual applications, users can be provided with a description document for controlling video editing with scripts at a designated position in the video editing software, and the description document includes but is not limited to the introduction of script editing language, the function description of scripts, the specific way to control video clipping with scripts, etc., so that users can clearly know how to perform edit processing on the objects to be edited with scripts from the description document, so as to realize video editing.

The language corresponding to the script is not limited by the embodiments of the present disclosure. In some specific implementation examples, the scripts can be realized by using a self-defined domain specific language (DSL), which can also be called a dynamic script language. Grammatically, such language styles like JavaScript, Lua, KotlinScript can be used, which is not limited here. The script program can include the following contents: 1) Basic Control Flow: such as conditional judgment statement if, loop control statement for, while, etc.; 2) Functions: built-in functions and user-defined functions. The built-in function can be an inherent function provided by video editing software in advance, such as a getCurrentTime function for getting the duration of the current timeline, a getBeginTime for getting the begin time of an element, etc., and the user-defined function can be a function into which the to-be-realized logic is written by users according to requirements. 3) Trigger. A trigger is a kind of function in essence, but it is executed and called back by the script control program, and users have no need to call it back actively, but trigger it passively. For example, a trigger can include an onStart function for triggering execution of the script, an onEnd function for triggering the end of execution of the script, and etc. The above-mentioned function names are exemplary and should not be considered as limitations. In the embodiments of the present disclosure, the types of objects to be edited mentioned above (such as elements on the track, video attributes, etc.) can all be scripted, and different objects to be edited can also be called different types of scriptable entity objects, alternatively, they can be added with corresponding scripts. The way to perform clipping for a video by controlling a corresponding object to be edited based on the script can realize more functions.

A script usually has some basic functions and triggers, which illustratively include, but are not limited to: a getCurrentTime function for getting the duration of the current timeline, a getCurrentInnerTime function for getting the internal duration of the current object to be edited , a getBeginTime function for getting the begin time of the object to be edited , a getEndTime function for getting the end time of the object to be edited , an onStart function for calling back when the script of the object to be edited is executed, an onEnd function for calling back when the trigger of the object to be edited is ended, an onTimeChanged function for triggering when the time of the object to be edited is modified, and etc.

On the basis of the above-mentioned basic functions, different types of objects to be edited can also have different script functions, and the functions of these script functions can be fixed or extended (such as being updated by application upgrade or defined by application users). Illustratively, the basic functions owned by the script corresponding to each object to be edited are illustrated below, and the contents within brackets carried by the basic functions are used to represent the function names that realize the functions. It should be noted that the function names are only illustrative, which can be specifically set according to the actual situation and should not be regarded as limitations.

For a script corresponding to time, its basic functions include, but are not limited to: get duration of timeline (getTimelineDuration), get all tracks under timeline(getAllTracks), get track information according to track identification (getTrackById), and etc. For a script corresponding to track, its basic functions include but are not limited to: get elements on track (getAllElements), get element information according to element identification (getElementById), set track visibility (setTrackVisibility), delete track (deleteTrack), add track (addTrack), copy track (copyTrack), and etc. For a script corresponding to sticker, its basic functions include but are not limited to: scale sticker (scaleSticker), translate sticker (translateSticker), rotate sticker (rotateSticker), set transparency (setStickerAlpha), delete sticker (deleteSticker), add sticker (addSticker), copy sticker (Copy Sticker), and etc. For a script corresponding to text, its basic functions include but are not limited to: modify text content (editTextContent), modify text style (editTextStyle), scale text (scaleText), translate sticker (translateText), rotate text (rotateText), set transparency (setTextAlpha), delete text (deleteTxt), add text (addText), copy text (copyText), and etc. For a script corresponding to effect, its basic functions include but are not limited to: delete effect (deleteEffect), add effect (addEffect), edit effect (editEffect), and etc. For a script corresponding to filter, its basic functions include but are not limited to: delete filter (deleteFilter), add filter (addFilter), edit filter information (editFilter), and etc. For a script corresponding to transfer animation, the basic functions include but are not limited to: delete transfer animation (deleteTransferAnimation), add transfer animation (addTransferAnimation), edit transfer animation information (editTransferAnimation), set animation interpolator (setInterpolator), and etc. For a script corresponding to audio, the basic functions include but are not limited to: delete audio (deleteAudio), add audio (addAudio), split audio (splitAudio), set audio information (setAudiolnfo), and etc. All the above are illustrative. Other functions can also be realized in actual applications, and the function names and specific code logic of the functions can also be adjusted, which are not limited here.

In actual applications, the third object to be edited includes a plurality of third objects to be edited . That is, in a video editing task, users can perform control for the plurality of objects to be edited involved by means of customized scripts, and each third object to be edited can be added with a corresponding script. Illustratively, a video editing task involves five third objects to be edited , namely, a timeline, a video, two stickers and an audio, and each third object to be edited is added with a corresponding customized script, so there are five scripts to be executed in the video editing task, in other words, the video editing task can be executed based on these five scripts. When the to-be-processed video is clipped based on the scripts corresponding to the third objects to be edited , the scripts can be initialized first, that is, the scripts required for video editing can be pre-loaded. In some implementation examples, the initialization order of the scripts can be determined based on the hierarchical relationships among the third objects to be edited . Specifically speaking, it can be realized by referring to the following steps A to C.

Step A, building a tree diagram based on hierarchical relationships among the plurality of third objects to be edited .

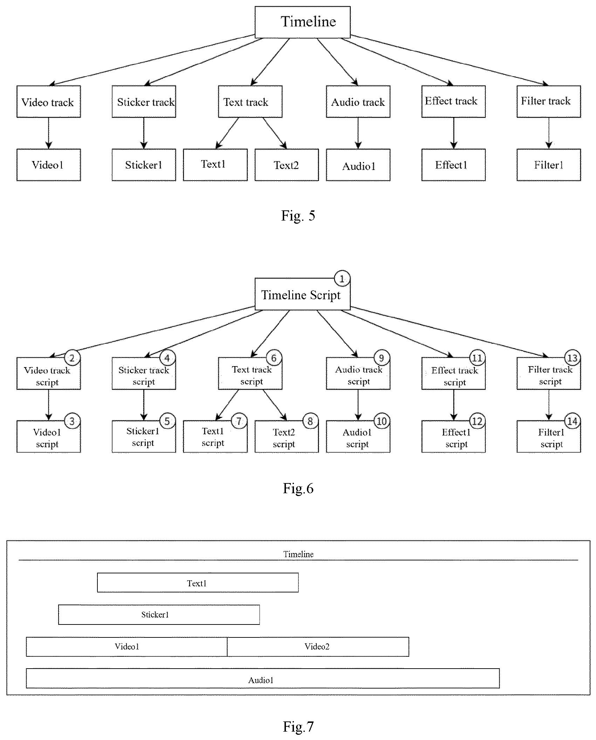

Refer to a schematic tree diagram of the hierarchical relationships of objects to be edited shown in Fig. 5, which shows the timeline, the tracks corresponding to the elements, and the hierarchical relationships among the elements. It can be understood that the tracks belong to members of the timeline and the materials belong to members of the material tracks. Based on the hierarchical relationships among the plurality of objects to be edited , a tree structure can be formed from top to bottom, and a schematic tree diagram shown in Fig. 5 is presented. It should be noted that Fig. 5 is only illustrative and should not be considered as a limitation.

Step B, determining a script initialization order of the plurality of third objects to be edited according to the tree diagram and a preset traversal algorithm.

In some implementations, the traversal algorithm can be, for example, a tree-based preorder traversal algorithm, and a script initialization order (alternatively a pre-loading order) of each target element can be determined from the tree-based preorder traversal algorithm and the tree diagram. Illustratively, please refer to a schematic diagram of script initialization ordering shown in Fig. 6. On the basis of a tree result, the initialization execution order of the script of each object to be edited obtained from the preorder traversal algorithm is adopted, that is, the timeline script is initialized first, and then the video track script is initialized. Details can refer to the initialization order marked in Fig. 6. It should be noted that Fig. 6 is only an example, and other traversal algorithms can also be used in actual applications, such as a sequence traversal algorithm, etc., which is not limited here.

Step C, executing an initialization operation on the target scripts of the plurality of the third objects to be edited based on the script initialization order.

In the above way, the plurality of target scripts can be initialized in an order, so that they can be directly executed later.

The script of each object to be edited , when executed, embodies spatiality and timeliness. In space, it is embodied as the above-mentioned determining a script initialization order based on the hierarchical relationships among the objects to be edited . In time, each object to be edited has its start and end times. Fig. 7 shows a schematic diagram of start and end times of objects to be edited , where the start and end times of the object to be edited are showed in the form of a length of the material track. The actual execution order of each script needs to be determined from the start and end times of the corresponding object to be edited , for example, the script corresponding to the object to be edited that appears first in the video is executed first. A trigger can be set in the script. When the current time reaches the start time of the object to be edited , the trigger onStart in the script can be automatically called, that is, the execution of the script corresponding to the object to be edited can be triggered. When the current time reaches the end time of the object to be edited , the trigger onEnd in the script can be automatically called, that is, the end of execution of the script corresponding to the object to be edited can be triggered. The plurality of scripts need to be executed in the order of timeline, and a linked list in data structure can be used to record the order of script execution. During script execution, the trigger function will be called according to the timeline, so that the plurality of scripts are executed in the order of time.

It should be noted that the script initialization order is different from the actual execution order of the script. The script initialization order is mainly determined based on the hierarchy among the objects to be edited , and the actual execution order of the script is mainly determined based on the order of the appearance time of the objects to be edited . For example, although the initialization time of the sticker track script is earlier than that of the text track script in the initialization order, if the appearance time of the sticker in the video is later than that of the text in video editing, the execution order of the sticker track script is later than that of the text track script.

The embodiments of the present disclosure further provide a specific way to perform edit processing on the third objects to be edited by executing the target scripts. Illustratively, it is possible to, based on start times indicated in the target scripts corresponding to the plurality of third objects to be edited , order the target scripts corresponding to the plurality of third objects to be edited in an ascending order of time; for the third object to be edited ordered first, when a current time reaches the start time corresponding to the third object to be edited , perform edit processing on the third object to be edited by executing the target script corresponding to the third object to be edited ; for the third object to be edited not ordered first, when a target script corresponding to a previous third object to be edited of the third object to be edited has been executed and the current time reaches the start time corresponding to the third object to be edited , perform edit processing on the third object to be edited by executing the target script corresponding to the third object to be edited . It should be noted that the script execution order refers to the time when the execution of the script is started, and the order of script execution can be recorded in the form of a linked list. That the target script corresponding to the previous third object to be edited has been executed means that the target script corresponding to the previous third object to be edited has started to be executed, rather than having finished being executed. In fact, although the target scripts corresponding to different third objects to be edited may have different start times of execution, the time durations for the execution of the target scripts can overlap, that is, the target scripts can run at the same time, for example, during the running of the video track script, the timeline script can always be in the running state. In the above way, when there are a plurality of third objects to be edited , video clipping can be still performed orderly and reliably based on the target scripts corresponding to the plurality of third objects to be edited . There will be no confusion, and the accuracy of video clipping is ensured.

In addition, considering that users may modify the time when the third object to be edited starts to appear on the video, the above-mentioned method further includes: in a case where the target script corresponding to the third object to be edited indicates that the start time corresponding to the third object to be edited is modified, re-ordering the target scripts corresponding to the plurality of third objects to be edited in an ascending order of time. That is, as long as the start time of a target script is modified, the target scripts of the plurality of third objects to be edited need to be re-ordered, so that the order of script execution can be timely revised, thereby ensuring that the appearance times of the third objects to be edited in the video meet the requirements of users and achieving the video editing effect required by users.

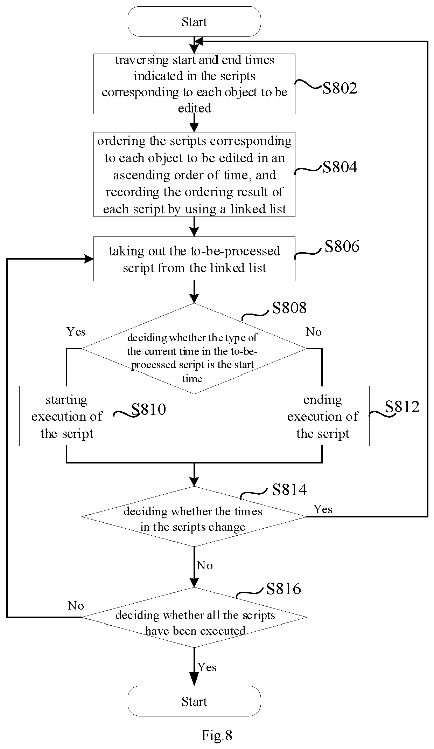

In actual applications, for the scripts involved in the video editing process, no matter whether users trigger the preset script corresponding to the first editing tool or users trigger the target script input by the second editing tool, they can be executed according to a schematic diagram of a script execution flow as shown in Fig. 8, which mainly includes the following steps.

Step S802, traversing start and end times indicated in a script corresponding to each object to be edited

Step S804, ordering the script corresponding to each object to be edited in an ascending order of time, and recording the ordering result of each script by using a linked list. Specifically speaking, the linked list is generated by the execution system of scripts after determination of the execution orders of the scripts. The linked list can contain scripts corresponding to the elements, and the scripts are ordered in the linked list in an ascending order of time.

Step S806: taking out the to-be-processed script from the linked list. In actual applications, only one script can be taken out and processed at a time according to the ordering of scripts until step S816 is executed. If it is decided by step S816 that not all scripts have been executed, return to step S806, that is, a next script will be taken out from the linked list and then processed according to the following steps.

Step S808, deciding whether the type of the current time in the to-be-processed script is the start time. If yes, step S810 is executed; if no, step S812 is executed.

Step S810, starting execution of the script. A trigger can be set in the script. If the start time is obtained from the to-be-processed script, that is, the current time reaches the start time, the trigger onStart in the script can be automatically called, that is, the execution of the script corresponding to the element is triggered, which is equivalent to formal execution of the script.

Step S812, ending execution of the script. If the type of the current time in the to-be-processed script is not the start time, it means that the end time is obtained from the to-be-processed script, that is, the current time reaches the end time. Therefore, the trigger onEnd in the script can be automatically called, that is, the end of execution of the script corresponding to the element is triggered.

Step S814, deciding whether the time in the script changes. If yes, step S802 is executed, and if no, step S816 is executed. Specifically speaking, because the start time when the element indicated in the script acts on the video changes, the execution orders of the plurality of scripts will be affected. Therefore, whether the start time in the script changes can be judged. If there is a change, the re-adjustment of the ordering of the plurality of element scripts is triggered.

Step S816, deciding whether all the scripts have been executed. If yes, the end; if no, step S806 is executed.

In the above way, it can be ensured that video clipping can be realized orderly and reliably for a plurality of scripts, and that the video editing effect meets the requirements of users.

For convenience of users to clearly and intuitively know the video editing effect, a preview player is also presented on the video editing interface. The method provided by the embodiments of the present disclosure further includes: presenting an editing effect corresponding to the target script on a preview player. For example, for a sticker script, if transparency of the sticker is set in the script, the effect of the sticker on the video will be presented synchronously on the preview player based on the transparency of the sticker. For another example, for a text script, if a text style is set in the script, the effect of the text on the video will be presented synchronously on the preview player in the text style. In the above way, users can clearly and intuitively know the video clipping effect controlled based on element scripts, and it is also helpful for users to decide whether the scripts need to be changed according to the intuitive video clipping effect.

In the embodiments of the present disclosure, not only a first editing tool can be provided for users, so as to provide users with convenient and quick editing functions, where the first editing tool can be presented on the video editing interface in the form of, e.g. a function trigger button or an adjustment bar, so as to provide users with a visual interaction way, but also a second editing tool can be provided for users, so as to enable users to realize video clipping by using customized scripts, where users can flexibly select the required way to perform video clipping according to requirements. In addition, when users are not satisfied with the video presentation effect of the object to be edited on which edit processing is performed based on the customized script, the first editing tool can also be flexibly called again for modification. Based upon this, the above-mentioned method further includes: in a case where it is monitored that the user performs edit processing on a fourth object to be edited through the first editing tool, modifying a target script for generating the fourth object to be edited based on the edit processing way corresponding to the first editing tool, so that the video editing effect corresponding to the modified target script is consistent with the video editing effect resulting from adjustment by the first editing tool, that is, when users perform a visualized operation for a certain fourth object to be edited , the script can also be adjusted accordingly. For example, the start time of the fourth object to be edited set by users in the script is A, and if users further adjust the start time of the fourth object to be edited by the first editing tool and changes start time A to start time B, accordingly the start time of the fourth object to be edited in the script will also be synchronously changed to B on the script. In this way, the consistency between the final script and the editing effect can be well guaranteed.

In the embodiments of the present disclosure, the first editing tool can provide users with a visual function button, and users trigger the preset script to perform edit processing by means of triggering the visual function button, which can be called a visualization-based video editing operation. The second editing tool can provide users with a script editing interface, and users can input a customized script in the script editing interface to perform edit processing, which can be called a customized script-based video editing operation. No matter whether the visualization-based video editing operation or the customized script-based video editing operation, the essence is to adjust the related data (such as start and end times, element presentation form, etc.) corresponding to the object to be edited . Through the above-mentioned examples provided by the embodiments of the present disclosure, it is possible to make the customized script-based video editing operation and the visualization-based video editing operation realize bidirectional synchronization, achieve a consistent video editing effect, and facilitate flexible selection/switching of the required video editing operation of users. Moreover, the way to perform video editing based on scripts provided by the embodiments of the present disclosure can also enable users to realize effects that are not available in the original functions of video editing software, for example, users can self-define more complicated entrance animation forms according to requirements, without being limited to the limited entrance animation forms provided by video editing software. Therefore, more diverse video editing ways can be provided for users, and video editing can be made more flexible and free.

To sum up, the above-mentioned video editing method provided by the embodiments of the present disclosure includes but is not limited to the following beneficial effects.

(1) Because a path is provided for users to implant code segments (enter scripts) according to requirements, it is convenient for users to write scripts according to requirements and perform video editing with scripts, thus realizing the functions required by themselves. That is, users can perform video editing without being limited to the solidified function of video editing software but according to their own requirements, thus meeting the diverse requirements for editing of users.

(2) The convenience of video editing is improved. In the related art, when performing video editing using a material, users may need to set a variety of parameters, such as the start time and end time of the materials or other fine-tuning parameters. If fine-tuning is performed for each material in turn, users need to operate them one by one, which is very time-consuming and laborious. Moreover, operations such as adjusting the start and end times by dragging the tracks are prone to errors, so it is impossible to fully achieve the time point expected by users. However, it is very convenient to perform clipping with scripts. It is only necessary to set related code parameters in the script to achieve the required effect without repeated adjustment.

(3) Scripts can be reused, which can effectively improve the efficiency of video processing in batches. Scripts can also be used in batches. Users can write a plurality of scripts in advance, such as pre-editing and saving common scripts for each object to be edited , which can be directly called by script names when applied, thus further improving the efficiency of video editing. There is no need to perform editing in a visualized way for each video one by one, which greatly shortens the time consumption for video processing in batches.

(4) Users can flexibly select the required editing way according to requirements, such as select the visualization-based video editing operation or the customized script-based video editing operation, which further improves the experience of video editing.

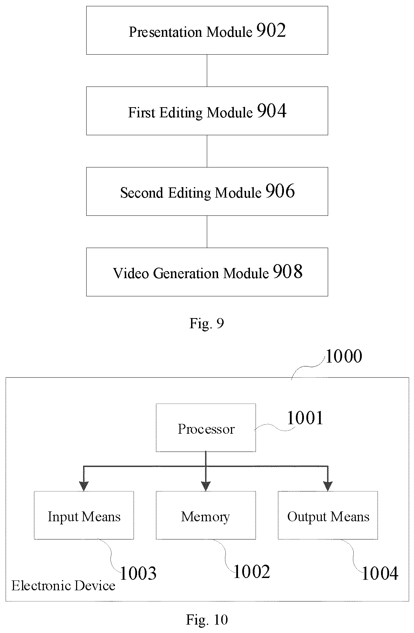

Corresponding to the aforementioned video editing method provided by the embodiments of the present disclosure, an embodiment of the present disclosure further provides a video editing apparatus. Fig. 9 is a schematic structural diagram of a video editing apparatus provided by an embodiment of the present disclosure, which can be implemented by software and/or hardware and can be generally integrated into an electronic device, as shown in Fig. 9, and includes:
a presentation module 902 for presenting objects to be edited and editing tools on a video editing interface, where the editing tools are configured for triggering editing operations on the objects to be edited ;
a first editing module 904 for performing, in response to triggering a first editing tool in the editing tools for a first object to be edited in the objects to be edited , edit processing on the first object to be edited by executing a preset script corresponding to the first editing tool, so as to obtain a second object to be edited ;
a second editing module 906 for, in response to triggering a second editing tool in the editing tools for a third object to be edited in the objects to be edited , presenting a script editing interface of the third object to be edited , acquiring a target script input in the script editing interface, and performing edit processing on the third object to be edited by executing the target script, so as to obtain a fourth object to be edited ;
a video generation module 908 for generating a target video based on the second object to be edited and/or the fourth object to be edited .

According to the above-mentioned technical solution provided by the embodiment of the present disclosure, it is possible to enable users to directly perform edit processing by using a preset script corresponding to the first editing tool, which is convenient and fast, and it is also possible to present the script editing interface when users trigger the second editing tool, so that users can input, by themselves, the required target script on the script editing interface according to requirements and perform edit processing by using the target script, that is, users are granted with a script addition permission, thus meeting the diverse requirements for editing of users and greatly improving the flexibility of video editing.

In some implementations, a video editing track is presented on the video editing interface, and the object to be edited includes elements on the video editing track and/or attributes of the target video.

In some implementations, a script editing window through which script codes can be entered is presented on the script editing interface. The second editing module 906 is specifically configured for: acquiring script codes entered by a user through the script editing window; obtaining a target script based on the script codes entered by the user.

In some implementations, a script acquisition link is presented on the script editing interface. The second editing module 906 is specifically configured for: in response to the script acquisition link being triggered, jumping to a script library; where the script library includes a personal script library and/or a public script library; acquiring a script selected by a user from the script library; obtaining a target script based on the script selected by the user.

In some implementations, the second editing module 906 is specifically configured for, in a case where the user performs editing for the selected script, taking the edited script as the target script.

In some implementations, the third object to be edited includes a plurality of third objects to be edited , and the second editing module 906 is specifically configured for: based on start times indicated in the target scripts respectively corresponding to the plurality of third objects to be edited , ordering the target scripts corresponding to the plurality of third objects to be edited in an ascending order of time; for the third object to be edited ordered first, when a current time reaches the start time corresponding to the third object to be edited , performing edit processing on the third object to be edited by executing the target script corresponding to the third object to be edited ; for the third object to be edited not ordered first, when a target script corresponding to a previous third object to be edited of the third object to be edited has been executed and the current time reaches the start time corresponding to the third object to be edited , performing edit processing on the third object to be edited by executing the target script corresponding to the third object to be edited .

In some implementations, the apparatus further includes a re-ordering module for: in a case where a target script corresponding to the third object to be edited indicates that the start time corresponding to the third object to be edited is modified, re-ordering the target scripts corresponding to the plurality of third objects to be edited in an ascending order of time.

In some implementations, the apparatus further includes an initialization module for: building a tree diagram based on hierarchical relationships among the plurality of third objects to be edited ; determining a script initialization order of the plurality of third objects to be edited according to the tree diagram and a preset traversal algorithm; executing an initialization operation on the target scripts of the plurality of the third objects to be edited based on the script initialization order.

In some implementations, a preview player is also presented on the video editing interface. The apparatus also includes: an effect presentation module for presenting an editing effect corresponding to the target script on the preview player.

In some implementations, the apparatus further includes a modification module for, in a case where it is monitored that the user performs edit processing on a fourth object to be edited through the first editing tool, modifying a target script for generating the fourth object to be edited based on the edit processing way corresponding to the first editing tool.

In some implementations, the apparatus further includes an instruction provision module for providing instructions for use of the editing tool at a designated position of the video editing interface; where the instructions for use include a script language instruction and a script function instruction corresponding to the object to be edited

The video editing apparatus provided by the embodiment of the present disclosure can execute the video editing method provided by any embodiment of the present disclosure, and has corresponding functional modules for executing the method and beneficial effects.

It can be clearly understood by those skilled in the art that, for the convenience and conciseness of description, the specific working process of the apparatus embodiment described above can refer to the corresponding process in the method embodiment, and will not be repeated here.

An embodiment of the present disclosure provides an electronic device, which includes: a processor; a memory for storing executable instructions of the processor; where the processor is configured for reading the executable instructions from the memory and executing the executable instructions so as to implement the above-mentioned video editing method.

Fig. 10 is a schematic structural diagram of an electronic device provided by an embodiment of the present disclosure. As shown in Fig. 10, an electronic device 1000 includes one or more processors 1001 and a memory 1002.

The processor 1001 can be a central processing unit (CPU) or other forms of processing unit with data processing capability and/or instruction execution capability, and can control other components in the electronic device 1000 to perform expected functions.

The memory 1002 can include one or more computer program products, which can include various forms of computer-readable storage media, such as a volatile memory and/or a nonvolatile memory. The volatile memory can include, for example, a random access memory (RAM) and/or a cache and the like. The nonvolatile memory can include, for example, a read-only memory (ROM), a hard disk, a flash memory, and the like. One or more computer program instructions can be stored on the computer-readable storage medium, and the processor 1001 can run the program instructions to realize the video editing method of the embodiments of the present disclosure described above and/or other expected functions. Various contents such as an input signal, a signal component, a noise component and the like can also be stored in the computer-readable storage medium.

In one example, the electronic device 1000 can further include: an input means 1003 and an output means 1004, which are interconnected by a bus system and/or other forms of connection mechanisms (not shown).

In addition, the input means 1003 can also include, for example, a keyboard, a mouse, and the like.

The output means 1004 can output various information to the outside, including the determined distance information, direction information, and the like. The output means 1004 can include, for example, a display, a speaker, a printer, a communication network, a remote output device connected thereto, and the like.

Certainly, for simplicity, only some components related to the present disclosure in the electronic device 1000 are shown in Fig. 10, and components such as a bus, an input/output interface and the like are omitted. Besides, according to the specific application situation, the electronic device 1000 can also include any other suitable components.

In addition to the above-mentioned method and device, an embodiment of the present disclosure can also be a computer program product, which includes computer program instructions which, when run by a processor, cause the processor to execute the video editing method provided by the embodiments of the present disclosure.

The computer program product can write program codes for executing operations of the embodiments of the present disclosure in any combination of one or more programming languages which include object-oriented programming languages such as Java, C++, as well as conventional procedural programming languages such as "C" or similar programming languages. The program codes can be completely executed on a user computing device, partially executed on the user device, executed as an independent software package, partially executed on the user computing device and partially executed on a remote computing device, or completely executed on the remote computing device or a server.

In addition, the embodiment of the present disclosure can also be a computer-readable storage medium storing thereon computer program instructions which, when run by a processor, cause the processor to execute the video editing method provided by the embodiments of the present disclosure.

The computer-readable storage medium can adopt any combination of one or more readable media. The readable medium can be a readable signal medium or a readable storage medium. The readable storage medium can include, for example, but not limited to, an electrical, magnetic, optical, electromagnetic, infrared, or semiconductor system, apparatus or device, or a combination of any of the above. More specific examples (a non-exhaustive list) of the readable storage medium include: an electrical connection with one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The embodiment of the present disclosure also provides a computer program product, including computer programs/instructions, which, when executed by a processor, implement the video editing method in the embodiments of the present disclosure.

It should be noted that, relational terms such as "first" and "second" herein are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed, or elements inherent to such process, method, article or device. Without further restrictions, an element defined by the phrase "including a ... " does not exclude the existence of other identical elements in the process, method, article or device including the element.

What has been described above are only the specific implementations of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to these embodiments described herein, but is to be accorded the widest scope consistent with the principles and novel features disclosed herein.

## Claims

1. A video editing method, comprising:
presenting objects to be edited and editing tools on a video editing interface, wherein the editing tools are configured for triggering editing operations on the objects to be edited;
in response to triggering a first editing tool in the editing tools for a first object to be edited in the objects to be edited , performing edit processing on the first object to be edited by executing a preset script corresponding to the first editing tool, so as to obtain a second object to be edited ;
in response to triggering a second editing tool in the editing tools for a third object to be edited in the objects to be edited , presenting a script editing interface of the third object to be edited , acquiring a target script input in the script editing interface, and performing edit processing on the third object to be edited by executing the target script, so as to obtain a fourth object to be edited ; and
generating a target video based on at least one of the second object to be edited and the fourth object to be edited.

2. The method according to Claim 1, wherein a video editing track is presented on the video editing interface, and the objects to be edited comprise at least one of elements on the video editing tack and attributes of the target video.

3. The method according to Claim 1, wherein a script editing window through which script codes can be entered is presented on the script editing interface; the step of acquiring a target script input in the script editing interface comprises:
acquiring script codes entered by a user through the script editing window; and
obtaining a target script based on the script codes entered by the user.

4. The method according to Claim 1, wherein a script acquisition link is presented on the script editing interface; the step of acquiring a target script input in the script editing interface comprises:
in response to the script acquisition link being triggered, jumping to a script library; wherein the script library comprises at least one of a personal script library and a public script library;
acquiring a script selected by a user from the script library; and
obtaining a target script based on the script selected by the user.

5. The method according to Claim 4, wherein the step of obtaining a target script based on the script selected by the user comprises: in a case where the user performs editing for the selected script, taking the edited script as the target script.

6. The method according to Claim 1, wherein the third object to be edited comprises a plurality of third objects to be edited, and the step of performing edit processing on the third object to be edited by executing the target script comprises:
based on start times indicated in the target scripts corresponding to the plurality of third objects to be edited , ordering the target scripts corresponding to the plurality of third objects to be edited in an ascending order of time;
for a third object to be edited ordered first, when a current time reaches the start time corresponding to the third object to be edited, performing edit processing on the third object to be edited by executing the target script corresponding to the third object to be edited; and
for a third object to be edited not ordered first, when a target script corresponding to a previous third object to be edited of the third object to be edited has been executed and the current time reaches the start time corresponding to the third object to be edited , performing edit processing on the third object to be edited by executing the target script corresponding to the third object to be edited .

7. The method according to Claim 6, the method further comprising:
in a case where a target script corresponding to the third object to be edited indicates that the start time corresponding to the third object to be edited is modified, re-ordering the target scripts corresponding to the plurality of third objects to be edited in an ascending order of time.

8. The method according to Claim 6, the method further comprising:
building a tree diagram based on hierarchical relationships among the plurality of third objects to be edited ;
determining a script initialization order of the plurality of third objects to be edited according to the tree diagram and a preset traversal algorithm; and
executing an initialization operation on the target scripts of the plurality of the third objects to be edited based on the script initialization order.

9. The method according to Claim 1, wherein a preview player is also presented on the video editing interface; the method further comprises:
presenting an editing effect corresponding to the target script on the preview player.

10. The method according to Claim 1, the method further comprising:
in a case where it is monitored that the user performs edit processing on a fourth object to be edited through the first editing tool, modifying a target script for generating the fourth object to be edited based on the edit processing way corresponding to the first editing tool.

11. The method according to Claim 1, the method further comprising:
providing instructions for use of the editing tool at a designated position of the video editing interface; wherein the instructions for use comprise a script language instruction and a script function instruction corresponding to the objects to be edited.

12. A video editing apparatus, comprising:
a presentation module for presenting objects to be edited and editing tools on a video editing interface, wherein the editing tools are configured for triggering editing operations on the objects to be edited ;
a first editing module for performing, in response to triggering a first editing tool in the editing tools for a first object to be edited in the objects to be edited , edit processing on the first object to be edited by executing a preset script corresponding to the first editing tool, so as to obtain a second object to be edited ;
a second editing module for, in response to triggering a second editing tool in the editing tools for a third object to be edited in the objects to be edited , presenting a script editing interface of the third object to be edited , acquiring a target script input in the script editing interface, and performing edit processing on the third object to be edited by executing the target script, so as to obtain a fourth object to be edited ; and
a video generation module for generating a target video based on at least one of the second object to be edited and the fourth object to be edited .

13. An electronic device, comprising:
a processor; and
a memory for storing executable instructions of the processor;
wherein the processor is configured for reading the executable instructions from the memory and executing the executable instructions so as to implement the video editing method according to any one of the Claims 1 to 11.

14. A computer readable storage medium storing a computer program for executing the video editing method according to any one of the Claims 1 to 11.

15. A computer program product comprising a computer program, wherein, the computer program, when executed by a processor, implements the video editing method according to any one of the Claims 1 to 11.
